# EUROPEAN PATENT APPLICATION

(11) **EP 4 286 719 A1**
(43) Date of publication of application: **06.12.2023**
(21) Application number: 22745175.4
(22) Date of filing: 24.01.2022
(51) Int. Cl.: F16K 31/02, F16K 5/06, F16K 5/08

(54) **ELECTRIC VALVE**

(30) Priority: 29.01.2021 CN 202110123104
(71) Applicant: Zhejiang Sanhua Automotive Components Co., Ltd., Hangzhou, Zhejiang 310018 (CN)
(72) Inventor: ZHU, Jinghui, Hangzhou Economic & Technological Development Area Hangzhou, Zhejiang 310018 (CN); XIA, Dun, Hangzhou Economic & Technological Development Area Hangzhou, Zhejiang 310018 (CN); QIU, Liangyong, Hangzhou Economic & Technological Development Area Hangzhou, Zhejiang 310018 (CN); ZHANG, Shanshan, Hangzhou Economic & Technological Development Area Hangzhou, Zhejiang 310018 (CN)
(74) Representative: Lavoix
(86) International application number: PCT/CN2022/073385
(87) International publication number: WO 2022/161300

(57) **Abstract**

An electric valve, comprising a valve body component (2), a valve core (4), a valve core base (23), and a first sealing member (24). The valve body component (2) comprises an accommodating portion (214), and the accommodating portion (214) forms an accommodating cavity (215). The first sealing member (24) comprises a first protruding portion (242), a second protruding portion (243), and a main body portion (241); the main body portion (241) is located between the first protruding portion (242) and the second protruding portion (243). The valve core base (23) comprises a first surface (2321), a second surface (2322), and a third surface (2314), wherein the first surface (2321) and the third surface (2314) extend in the radial direction of the valve core base (23); at least a part of the valve core base (23) is located in the accommodating cavity (215), and the first sealing member (24) is located in the accommodating cavity (215). Along the radial direction of the accommodating portion (214), the first protruding portion (242) abuts against the second surface (2322), and the second protruding portion (243) abuts against the accommodating portion (214); and along the axial direction of the accommodating portion (214), the main body portion (241) is axially pressed between the first surface (2321) and the side wall (221) of the valve body component (2), and the outer surface of a part of the valve core (4) is tightly attached to at least a part of the third surface (2314), thereby facilitating improving the sealing performance of the electric valve.

## Description

This application claims priority to Chinese Patent Application No. 202110123104.1, titled "ELECTRIC VALVE", filed on January 29, 2021 with the China National Intellectual Property Administration, which is incorporated herein by reference in its entirety.

### FIELD

The present application relates to an electric valve.

### BACKGROUND

An electric valve is generally used for controlling a flow path in a thermal management system. The electric valve includes a valve core. The electric valve switches in different flow paths through rotation of the valve core. That how to improve the sealing performance of the valve core during rotation and reduce the risk of internal leakage of the valve core during the rotation is a technical problem to be improved.

### SUMMARY

It is an object of the present application to provide a control valve that facilitates improving the sealing performance of an electric valve and reducing the risk of internal leakage of the electric valve during the rotation of a valve core.

To achieve the above object, the following technical solutions are provided according to the present application.

An electric valve includes a valve body assembly, a valve core, a valve core seat, and a first sealing member. The valve body assembly includes an accommodating portion defining an accommodating cavity, the first sealing member includes a body portion, a first protruding portion, and a second protruding portion, the body portion is arranged between the first protruding portion and the second protruding portion along a radial direction of the first sealing member, the valve core seat includes a first face, a second face, and a third face, the second face extends along an axial direction of the valve core seat, the first face and the third face each extends along an radial direction of the valve core seat, at least part of the valve core seat is arranged in the accommodating cavity, and the first sealing member is arranged in the accommodating cavity and is arranged at an outer periphery of part of the valve core seat.

In a radial direction of the accommodating portion, the first protruding portion abuts against the second face, the second protruding portion abuts against the accommodating portion; in an axial direction of the accommodating portion, one end of the body portion abuts against the first face and another end of the body portion abuts against a side wall of the valve body assembly, the first sealing member is in a tightly pressed state in an axial direction, and an outer surface of part of the valve core fits closely with at least part of the third face.

The electric valve is provided by the present application. The electric valve includes the valve body assembly, the valve core, the valve core seat, and the first sealing member. The valve body assembly includes the accommodating portion defining the accommodating cavity, the first sealing member includes the first protruding portion, the second protruding portion, and the body portion, the valve core seat includes the first face, the second face, and the third face, and the first face and the third face each extends along the radial direction of the valve core seat, at least part of the valve core seat is arranged in the accommodating cavity, the first sealing member is arranged in the accommodating cavity, the body portion is arranged between the first protruding portion and the second protruding portion along the radial direction of the accommodating portion, the first protruding portion abuts against the second face and the second protruding portion abuts against the accommodating portion. In the axial direction of the accommodating portion, the body portion is axially pressed tightly between the first face and a side wall of the valve body assembly, and the outer surface of part of the valve core fits closely with at least part of the third face. In this way, with the effects of the first protruding portion and the second protruding portion, the body portion can be sufficiently axially pressed against the first face and the side wall of the valve body assembly, which facilitates ensuring the sealing performance of the body portion, and facilitates closer fitting of the third face with the outer surface of the valve core, thereby facilitating improving the sealing performance of the electric valve and reducing the risk of internal leakage of the electric valve during the rotation of the valve core.

### BRIEF DESCRIPTION OF THE DRAWINGS

Figure 1 is a schematic diagram illustrating a three-dimensional structure of an electric valve according to an embodiment of the present application;
Figure 2 is a schematic diagram illustrating a cross-sectional structure of an electric valve;
Figure 3 is a schematic diagram illustrating a three-dimensional structure of a first valve body of Figure 2;
Figure 4 is a schematic diagram illustrating a three-dimensional structure of a second valve body in Figure 2
Figure 5 is a schematic diagram illustrating a cross-sectional structure of a first valve body and a second valve body after being assembled;
Figure 6 is a partially enlarged schematic view of part A in Figure 2;
Figure 7 is a schematic diagram illustrating a cross-sectional structure of a valve core seat in Figure 6;
Figure 8 is a schematic diagram illustrating a three-dimensional structure of a sealing member in Figure 6;
Figure 9 is a schematic diagram illustrating a cross-sectional structure of a sealing member in Figure 8;
Figure 10 is a schematic diagram illustrating a three-dimensional structure of a valve core in Figure 2;
Figure 11 is a partially enlarged schematic view of part B in Figure 7;
Figure 12 is another schematic diagram illustrating a cross-sectional structure of an electric valve;
Figure 13 is a schematic diagram illustrating a cross-sectional structure of a valve core in a rotation angle of 45 degrees;
Figure 14 is a schematic diagram illustrating a cross-sectional structure of a valve core in a rotation angle of 90 degrees;
Figure 15 is a schematic diagram illustrating a cross-sectional structure of a valve core in a rotation angle of 135 degrees; and
Figure 16 is a schematic diagram illustrating a cross-sectional structure of a valve core in a rotation angle of 180 degrees.

### DETAILED DESCRIPTION

The present application is further described below in conjunction with the accompanying drawings and specific embodiments.

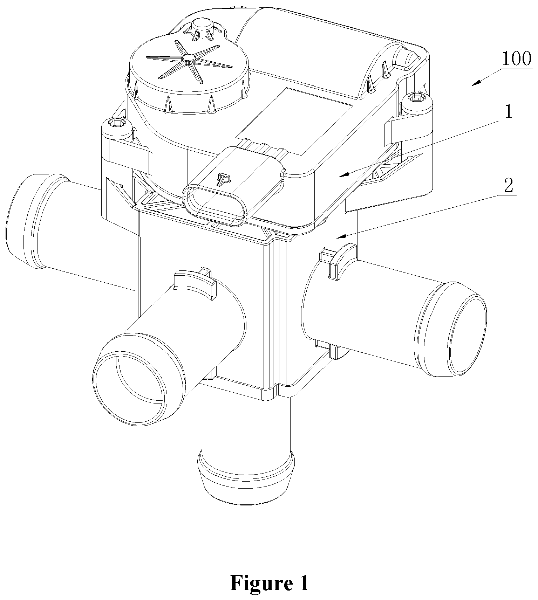

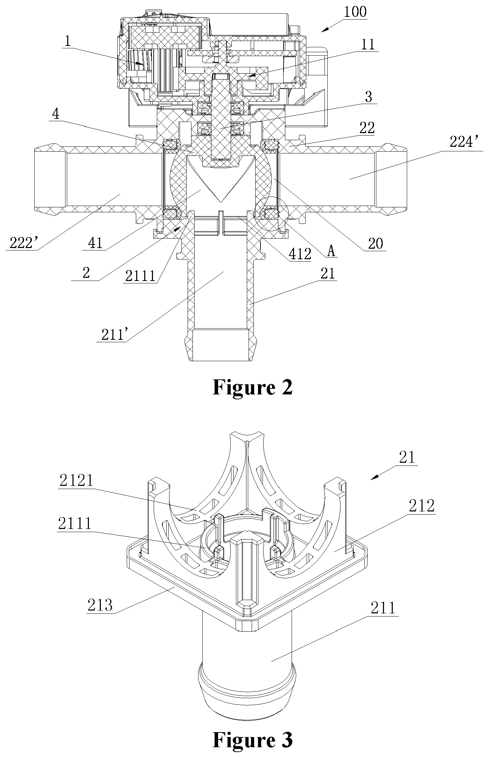

Referring to Figures 1 and 2, the electric valve may be applied to a vehicle thermal management system, and the vehicle thermal management system may specifically be a renewable energy vehicle thermal management system. The electric valve 100 includes a drive member 1, a valve body assembly 2, a valve stem 3 and a valve core 4. The drive member 1 is connected to the valve body assembly 2, and the valve core 4 is arranged in a valve body cavity 20 defined by the valve body assembly 2. One end of the valve stem 3 is connected to the drive member 1 in a transmission manner, and the other end of the valve stem 3 is connected to the valve core 4 in a transmission manner. A motor of the drive member 1 outputs a rotating torque and transmits the rotating torque to the valve stem 3. The valve stem 3 drives the valve core 4 to rotate. In an embodiment, the valve stem 3 and the valve core 4 are split structures, although as other implementations, the valve stem 3 and the valve core 4 may be in a one-piece structure. In addition, in the embodiment, the drive part 1 further includes a transmission mechanism 11, which may be a gear reduction mechanism. At least part of the transmission mechanism 11 is arranged in the drive member 1, and the drive member 1 is connected to the valve stem 3 in a transmission manner through the transmission mechanism 11. The transmission mechanism 11 is provided for increasing the rotational torque outputted by the motor of the drive member 1, transferring the rotational torque to the valve stem 3, and driving the valve core 4 to rotate through the valve stem 3. Of course, as other embodiments, the transmission mechanism 11 may not be provided in the drive member 1 in a case that the rotational torque outputted by the motor is sufficient to drive the valve core 4.

Referring to Figures 2 and 3, the valve body assembly 2 includes a first valve body 21 and a second valve body 22 which are fixedly connected. In an embodiment, the first valve body 21 and the second valve body 22 are fixedly connected by welding, although as other embodiments, the first valve body 21 and the second valve body 22 may be fixedly connected by means of screws or adhesive or interference fit or clasps. Referring to Figure 3, the first valve body 21 includes a first connection port portion 211, a first support bracket 212 and a bottom wall 213. In an axial direction of the first connection port portion 211, the first connection port portion 211 and the first support bracket 212 are respectively arranged at two ends of the bottom wall 213, the first connection port portion 211 extends along a direction perpendicular to the bottom wall 213 and away from the bottom wall 213, and the first support bracket 212 extends along the direction perpendicular to the bottom wall 213 and in the opposite direction to the direction of extension of the first connection port portion 211. A quantity of the first support bracket 212 is multiple. In the embodiment, the quantity of the first support bracket 212 is four, although as an alternative embodiment, the first support bracket 212 may also be provided in other quantities. The first support bracket 212 includes a first recessed face 2121 formed by a free end face of the first support bracket 212 recessing along the direction perpendicular to the bottom wall 213 towards an interior of the first support bracket. In an embodiment, the first recessed face 2121 is a semi-circular arc-shaped face, although as an alternative embodiment, the first recessed face 2121 may be of other shapes. The first connection port portion 211 is provided with a first connection port channel 211'. The first valve body 21 may be manufactured by injection moulding of a plastic material, e.g. polyamide (PA), or polyphthalamide (PPA), nylon, or the like.

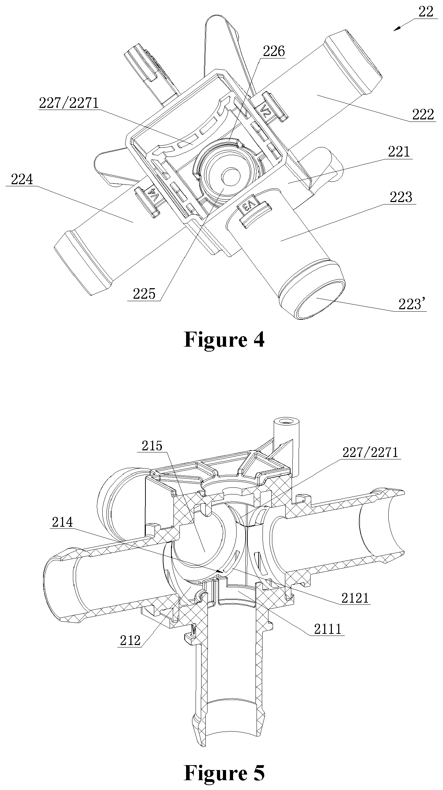

Referring to Figures 2 and 4, the second valve body 22 includes a side wall 221 with multiple wall faces and multiple connection port portions for communication with the outside. In an embodiment, the second valve body 22 includes three connection port portions of a second connection port portion 222, a third connection port portion 223 and a fourth connection port portion 224. Each of the three connection port portions extends along an outer side face perpendicular to different wall faces of the side wall 221 in a direction away from the outer side face. The three connection port portions are arranged in a same height or substantially a same height of the second valve body 22. In an embodiment, a central axis of the second connection port portion 222 coincides or substantially coincides with a central axis of the fourth connection port portion 224, a central axis of the third connection port portion 223 is perpendicular or substantially perpendicular to a central axis of the second connection port portion 222, and a central axis of the third connection port portion 223 is perpendicular or substantially perpendicular to the central axis of the fourth connection port portion 224. The second valve body 22 is provided with a first cavity 225 and three connection port portions are provided with the respective three connection port channels. In some embodiments, the second connection port portion 222 is provided with a second connection port channel 222', the third connection port portion 223 is provided with a third connection port channel 223' and the fourth connection port portion 224 is provided with a fourth connection port channel 224'. In terms of the second valve body 22, each of the three connection port channels of the second valve body is communicated with the first cavity 225.

Reference is further made to Figure 4, the second valve body 22 further includes a stop portion 226 and a second support bracket 227. The stop portion 226 is used to limit a rotation angle of the valve core 4. The second support bracket 227 has a quantity equal to the quantity of the first support bracket 212. In some embodiments, the quantity of the second support bracket 227 may be equal to the quantity of wall faces of the side wall 221 or the quantity of the second support bracket 227 is at least equal to the quantity of connection port portions at the second valve body. The second support bracket 227 is arranged in the first cavity 225, and multiple second support brackets 227 each extends along an inner side face of different wall faces perpendicular to the side wall 210 in a direction away from the inner side face. The second support bracket 227 includes a second recessed face 2271 formed by a free end face of the second support bracket 227 recessing along a direction parallel to the side wall 221 towards an interior of the second support bracket. In an embodiment, the second recessed face 2271 is a semi-circular arc-shaped face, although as other embodiments, the second recessed face 2271 may be of other shapes. The second valve body 22 may be formed by injection moulding of plastic materials, such as polyamide (PA) type materials, or polyphthalamide (PPA), or nylon type materials, or the like.

Referring to Figures 2 to 5, when the first valve body 21 and the second valve body 22 are assembled, the first support bracket 212 extends into the first cavity 225, and the bottom wall 213 of the first valve body abuts against the side wall 221 of the second valve body, specifically abuts against the free end portion of the side wall 221. The bottom wall 213 and the side wall 221 are fixedly connected by welding at a position where the bottom wall 213 abuts against the side wall 221, thereby achieving a fixed connection between the first valve body 21 and the second valve body 22. The first valve body 21 and the second valve body 22 are assembled to form a valve body cavity 20. In terms of the valve body assembly 2, four connection port channels are communicated with the valve body cavity 20, and a central axis of the first connection port portion 211 at the first valve body is perpendicular or substantially perpendicular to a plane in which central axes of the three connection port portions at the second valve body are located. During the welding of the side wall 221 to the bottom wall 213, the free end portion of the side wall 221 partially melts, causing the height of the side wall 211 to drop slightly so that the first support bracket 212 and the second support bracket 227 abut against each other, in this case, the first recessed face 2121 of the first support bracket 212 is assembled with the second recessed face 2271 of the second support bracket 227 to form an accommodating portion 214 defining an accommodating cavity 215. In an embodiment, since the first recessed face 2121 and the second recessed face 2271 each is a semicircular arc-shaped face, the formed accommodating portion 214 is a cylindrical cavity. Of course, as other embodiments, the accommodating portion 214 may further be of other shapes.

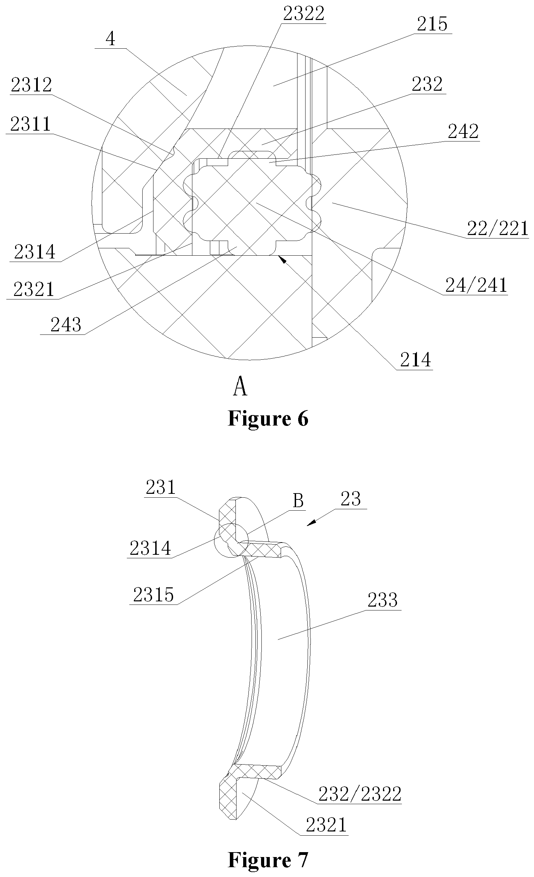

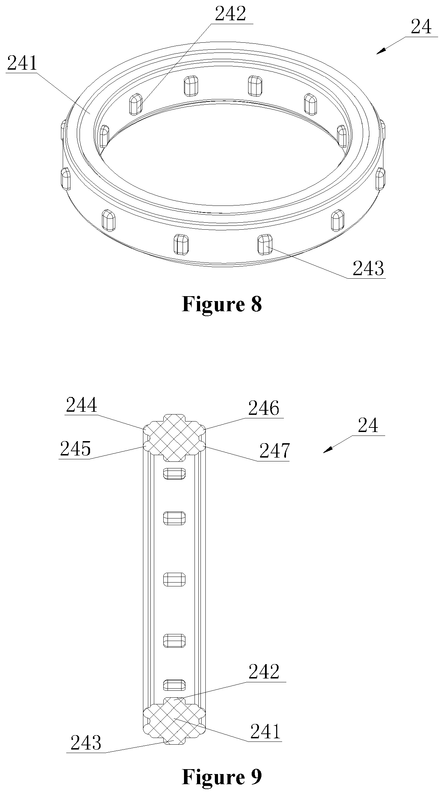

Referring to Figure 2 and Figures 6 to 9, the valve body assembly 2 further includes a valve core seat 23 and a first sealing member 24. The quantity of the valve core seat 23 is equal to the quantity of the first sealing member 24, and at least the quantity of the valve core seat 23 is equal to the quantity of connection port portions at the second valve body. The valve core seat 23 includes an inner peripheral face 231 and an outer peripheral face 232, the valve core seat 23 is provided with a first through-hole 233 passing through the valve core seat 23, the first through-hole 233 is used to communicate with the connection port channel, the outer peripheral face 232 includes a first face 2321 and a second face 2322, the first face 2321 being connected to the second face 2322,. The inner peripheral face 231 includes a third face 2314 and a fourth face 2315, the third face 2314 being connected to the fourth face 2315. A plane which may be a cross-portion passing through a central axis of the first through-hole 233 is defined. The plane may be a plane in which the cross-portion as shown in Figure 7 is located. The projection of the second face 2322 on the plane is parallel or substantially parallel to the central axis of the first through-hole 233. In an embodiment, an extension line of the projection of the first face 2321 on the plane is perpendicular or substantially perpendicular to the central axis of the first through-hole 233, and the projection of the fourth face 2315 on the plane is parallel or substantially parallel to the central axis of the first through-hole 233.

The first sealing member 24 may be an annular sealing member, and the first sealing member 24 includes a body portion 241, a first protruding portion 242 and a second protruding portion 243. The body portion 241 includes an outer peripheral side and an inner peripheral side, the first protruding portion 242 is projected inwardly from the inner peripheral side of the body portion 241 along a radial direction of the body portion 241, and the first protruding portion 242 may be equally circumferentially distributed along the inner peripheral side. Accordingly, the second protruding portion 243 is projected outwardly from the outer peripheral side of the body portion 241, and the second protruding portion 243 may be equally circumferentially distributed along the outer peripheral side. In an embodiment, the first protruding portion 242 and the second protruding portion 243 may be symmetrically distributed along the radial direction of the body portion 241 with respect to the body portion 241. The provision of the first protruding portion 242 and the second protruding portion 243 facilitates the first sealing member 24 being less likely to be detached when installed into the accommodating cavity 224.

Referring to Figure 2 and Figures 5 to 9, at least part of the valve core seat 23 is arranged in the accommodating cavity 215, the valve core seat 23 is supported by the accommodating portion 214, the first sealing member 24 is arranged at the outer periphery of the second face 2322, the first sealing member 24 is arranged in the accommodating cavity 215, the first protruding portion 242 abuts against the second face 2322 of the outer peripheral face 232, and the second protruding portion 243 abuts against the accommodating portion 214. In the radial direction of the accommodating portion 214, the body portion 241 is arranged between the first protruding portion 242 and the second protruding portion 243, and the first sealing member 24 is tightly pressed between the accommodating portion 214 and the second face 2322 through the first protruding portion 242 and the second protruding portion 243. In the axial direction of the accommodating portion 214, one end of the body portion 241 of the first sealing member 24 abuts against the first face 2321 of the peripheral face 232, and the other end of the body portion 241 abuts against the side wall 221 of the second valve body 22. The first sealing member 24 is tightly pressed between the first face 2321 and the side wall 221, and the first sealing member 24 is in a sealed and compressed state. In an embodiment, the body portion 241 of the first sealing member 24 further includes annular protruding ribs, the protruding ribs being protruded outwardly along two ends of the body portion respectively in an axial direction. In some embodiments, the protruding ribs include a first protruding rib 244, a second protruding rib 245, a third protruding rib 246 and a fourth protruding rib 247. The first protruding rib 244 and the second protruding rib 245 are arranged at the same end of the body portion 241, the third protruding rib 246 and the fourth protruding rib 247 are arranged at the same other end of the body portion 241. In the axial direction of the accommodating portion 214, the first protruding rib 244 and the second protruding rib 245 abut against the first face 2321 and the third protruding rib 246 and the fourth protruding rib 247 abut against the side wall 221. The first sealing member 24 is tightly pressed between the first face 2321 and the side wall 221 through the protruding ribs, and the first sealing member 24 is in a sealed and pressed state. By provision of the first protruding portion 242 and the second protruding portion 243, the first sealing member 24 and the valve core seat 23 can be better installed in the accommodating cavity 215, thereby facilitating preventing detachment. In addition, by means of the first protruding portion 242 and the second protruding portion 243, it is enabled to keep the protruding ribs or the body portion 241 centered so that the protruding ribs or the body portion 241 can be sufficiently pressed against the first face 2321 and the side wall 221, which facilitating improving the sealing performance of the electric valve and reducing the risk of internal leakage.

Referring to Figures 2, 6, 7, 10 and 11, in an embodiment, the valve core 4 is a sphere-like valve core. The valve core 4 includes a spherical face, an upper end face and a lower end face. A spherical face is an outer surface of the valve core 4 which is defined along the axial direction of the valve core 4. An end face, close to the valve stem 3, of the valve core 4 is an upper end face and an end face, away from the valve stem 3, of the valve core 4 is a lower end face. The valve core 4 is arranged in the valve body cavity 20, and the third face 2314 further includes an arc-shaped face 2311. Under an elastic force of the first sealing member in a tightly pressed state, as the valve core 4 rotates, at least part of the spherical face of the valve core 4 fits closely with the arc-shaped face 2311, and the valve core 4 slidably fits with the arc-shaped face 2311, and the valve core seat 23 supports and seals the valve core 4 through the arc-shaped face 2311. In an embodiment, the valve core seat 23 further includes an annular recess 2312 formed by the arc-shaped face 2311 recessing towards the interior of the valve core seat 23. The provision of the recess 2312 facilitates allowing impurities in the working fluid or worn particles dropped by frequent sliding friction between the valve core 4 and the arc-shaped face 2311 to enter a groove cavity formed by the recess 2312, avoiding the impurities or the worn particles from existing on the arc-shaped face 2311, resulting in a risk of the valve core 4 not sealing tightly with the arc-shaped face 2311 and internal leakage. In an embodiment, the recess 2312 includes an annular inclined face 2313, and a plane, which may be a cross portion passing through the central axis of the valve core seat 23, is defined. The plane may be a plane in which a cross portion as shown in Figure 7 is located, an included angle θ is formed by a projection of the annular inclined face 2313 on the plane and a projection of a straight face of the third face 2314 on the plane, which may generally be set in a range of 110 degrees to 130 degrees. The recess 2312 including the annular inclined face 2313 enables an opening of the valve core 4 to have a smooth transition when sliding in conjunction with the arc-shaped face 2311. The valve core seat 23 may be formed by injection molding of a hard, wear-resistant resin material such as polyvinylidene fluoride (PVDF), and the first sealing member 24 may be formed by injection molding of a soft rubber material such as ethylene propylene diene monomer (EPDM).

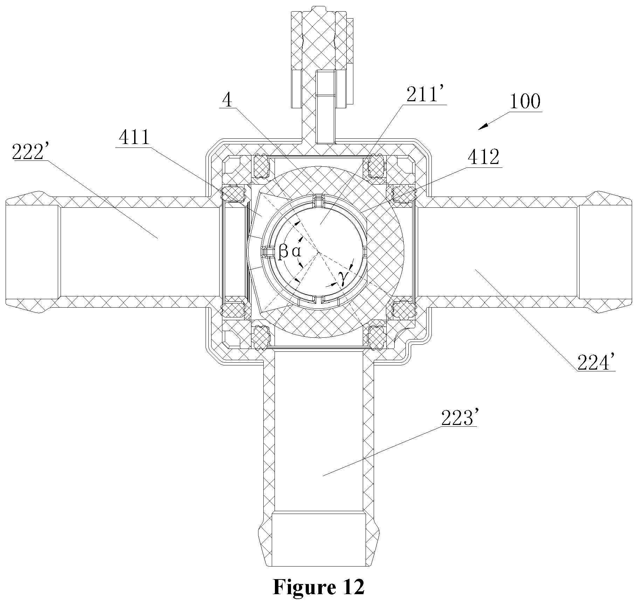

Referring to Figures 2, 10 and 12, the valve core 4 includes a guide channel 41 passing through the valve core 4, the guide channel 41 is provided with a first opening 411 and a second opening 412, the first opening 411 is arranged on the spherical face of the valve core 4 and the second opening 412 of the guide channel 41 is arranged on the lower face of the valve core 4. With the rotation of the valve core 4, the first connection port channel 211' is always communicated with the guide channel 41. A plane which is perpendicular to the central axis of the valve core 4 is defined, and the plane may be a plane in which a cross portion as shown in Figure 12 is located. An included angle α is defined by projections of the first opening 411 on the plane and a center of the projection of the spherical face on the plane. Endpoints where the projection of the arc-shaped face on the plane intersects the projection of the fourth face on the plane are defined as outer endpoints, an included angle β is defined by the outer endpoints of the projection of two arc-shaped faces sealing the first opening on the plane and the center, and an included angle γ is defined by the outer endpoints of the projection of two adjacent arc-shaped faces on the plane and the center, where β>α>γ. In this way, by rotation of the valve core 4, the first connection port channel 211' may be communicated with one or two of the three connection port channels (222', 223', 224') of the second valve body 22 through the guide channel 41. In an embodiment, the included angle α may be in a range of 70 degrees to 100 degrees. An angle of the first opening 411 may be determined according to a flow profile required for the actual application. Referring to Figures 2, 3 and 5, in an embodiment, the first connection port portion 211 further includes a projecting portion 2111 extending axially along the first connection port portion, the projecting portion 2111 and the first support bracket 212 are arranged on a same side of the bottom wall 213, the second opening 412 is arranged at an outer periphery of the projecting portion 2111, at least part of the projecting portion 2111 is arranged in the guide channel of the valve core, and the projecting portion 2111 is allowed to abut against the wall face forming the guide channel 41. The projecting portion 2111 is provided to limit a position of the valve core 4 in the valve cavity 20 and to facilitate preventing the valve core 4 from wobbling during rotation. In addition, the second opening 412 is arranged at the outer periphery of the projecting portion 2111 so as to ensure a direct communication between the guide channel 41 and the first connection port channel 211'.

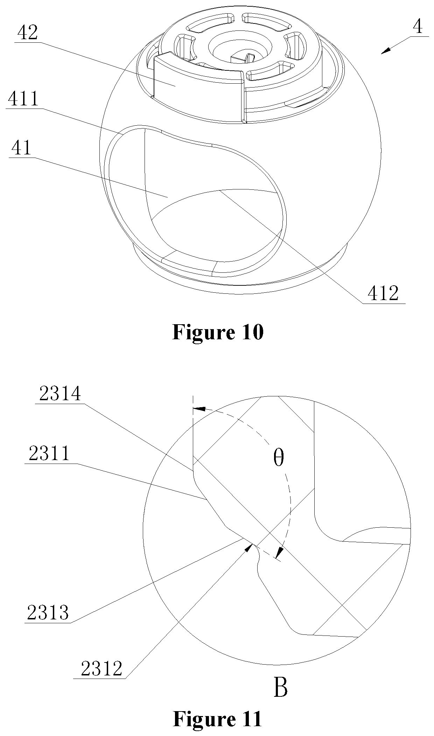

Referring to Figures 4 and 10, the valve core 4 further includes a limiting portion 42, which is allowed to abut against the stop portion 226 of the second valve body during the rotation of the valve core 4, thus limiting an angle in which the valve core 4 rotates. As in the embodiment, the valve core 4 is allowed to rotate in a range of 0 degrees and 180 degrees. Of course, as other embodiments, an angle at which the valve core 4 is rotatable may be in other ranges. The valve core 4 may be formed by injection moulding of plastic materials in one piece. For example, the valve core 4 may be formed by injection moulding of nylon or polyphenylene sulfide (PPS) type materials.

Referring to Figures 12 to 16, in one embodiment, the electric valve 100 operates in five operating modes.

In an embodiment, referring to Figure 12, a first operating mode in which the valve core 4 is defined to be rotated at an angle of 0 degree is shown. In the first operating mode, the first connection port channel 211' is communicated with the second connection port channel 222' through the guide channel 41.

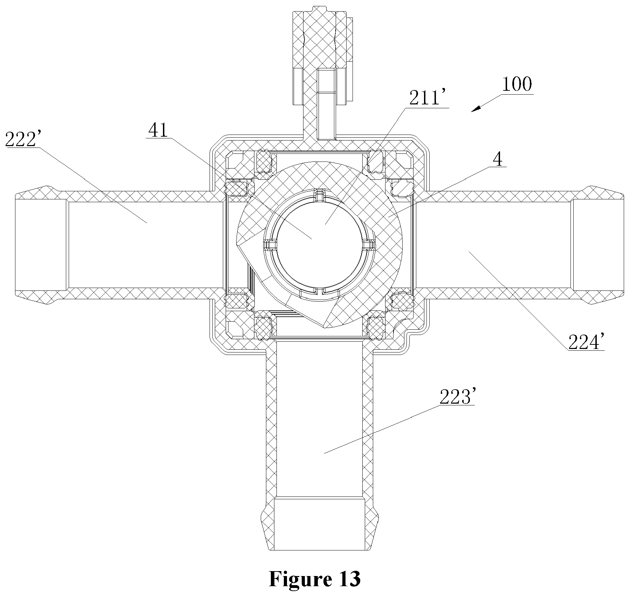

Referring to Figure 13, a second operating mode in which the valve core 4 rotates in a counterclockwise direction from 15 degrees to 75 degrees as shown is shown. In the second operating mode, the first connection port channel 211' is simultaneously communicated with the second connection port channel 222' and the third connection port channel 223' through the guide channel 41, and in the rotation of the valve core 4 from 15 degrees to 75 degrees, an area of a part in which the guide channel 41 is communicated with the second connection port channel 222' gradually decreases and an area of a part in which the guide channel 41 is communicated with the third connection port channel 223' gradually increases. When the valve core 4 rotates in an angle of 45 degrees, the area of the part in which the guide channel 41 is communicated with the second connection port channel 222' is equal to the area of the part in which the guide channel 41 is communicated with the third connection port channel 223'. That is, an area of a part in which the guide channel 41 is communicated with the second connection port channel 222' and an area of a part in which the guide channel 41 is communicated with the third connection port channel 223' may be proportionally adjusted by rotation of the valve core 4 to different angles.

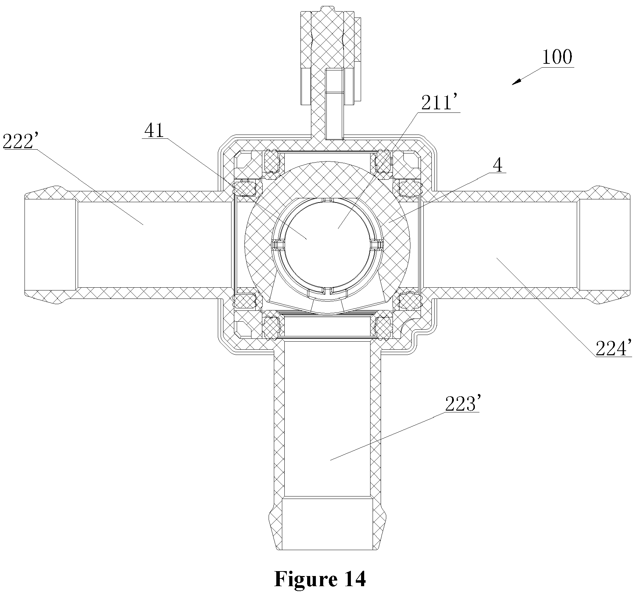

Referring to Figure 14, a third operating mode is shown. When the valve core 4 is rotated at an angle of 90°, the first connection port channel 211' is communicated with the third connection port channel 223' through the guide channel 41.

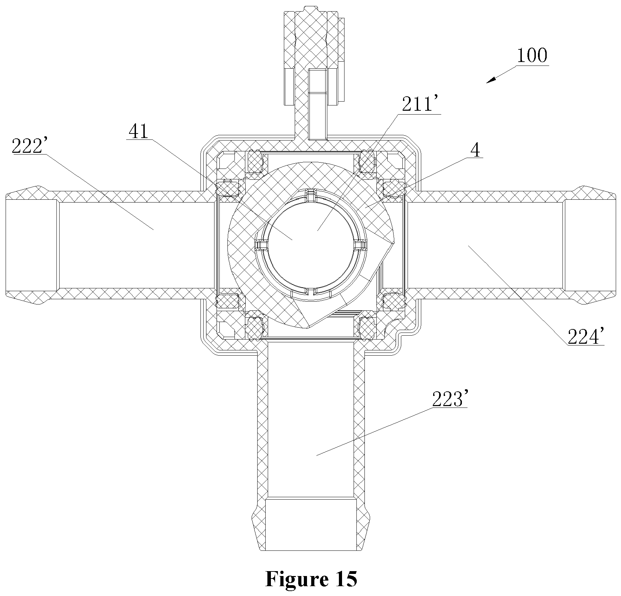

Referring to Figure 15, a fourth operating mode is shown. When the valve core 4 is rotated at an angle of 105 degrees to 165 degrees, the first connection port channel 211' is communicated with the third connection port channel 223' and the fourth connection port channel 224' through the guide channel 41. An area of a part in which the guide channel 41 is communicated with the third connection port channel 223' gradually decreases and an area of a part in which the guide channel 41 is communicated with the fourth connection port channel 224' gradually increases during the rotation of the valve core 4 from 105 degrees to 165 degrees. When the valve core 4 is rotated at an angle of 135 degrees, the area of the part in which the guide channel 41 is communicated with the third connection port channel 223' is equal to the area of the part in which the guide channel 41 is communicated with the fourth connection port channel 224'. Likewise, an area of a part in which the guide channel 41 is communicated with the third connection port channel 223' and an area of a part in which the guide channel 41 is communicated with the four connection port channel 224' may be proportionally adjusted by rotation of the valve core 4 to different angles.

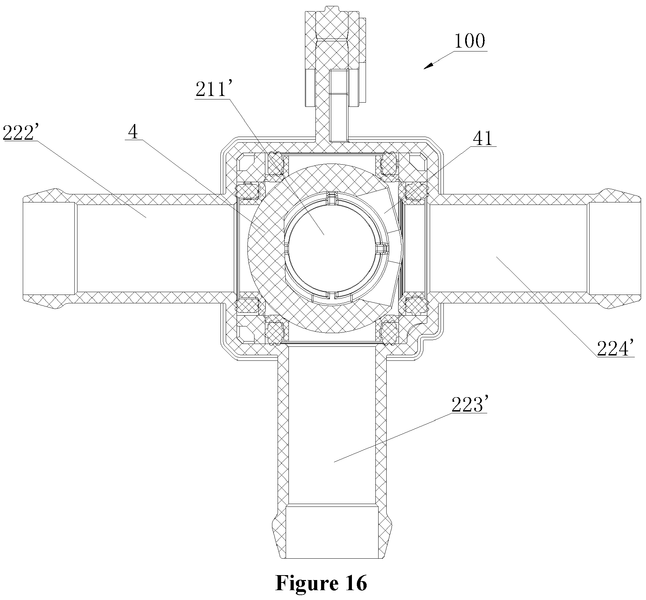

Referring to Figure 16, the fifth operating mode is shown. When the valve core 4 is rotated at an angle of 180 degrees, the first connection port channel 211' is communicated with the fourth connection port channel 224' through the guide channel 41.

The above operating modes are not limited sequentially and it may be switched directly between different operating modes by the rotation of the valve core 4. In addition, the electric valve in the above embodiments is illustrated as a four-way valve, but is not limited to the illustrated four-way valve. The electric valve may be a five-way valve or other multi-way valve. In some embodiments, the electric valve may be defined as being provided with N connection port channels, N ≥ 4 and N is an integer. The connection port channel includes a first connection port channel, the valve core is provided with a guide channel, and the first connection port channel is always communicated with the guide channel. The first connection port channel may be communicated with one or two of remaining connection port channels through the guide channel by setting a first opening angle of the valve core and rotating the valve core.

It should be noted that the above embodiments are only used to illustrate the present application and not limit the technical solutions described in the present application, for example, the definition of directions such as "front", "rear", "left", "right", "upper", "lower", "inner", and "outer". Although the present application is described in detail in the description with reference to the above embodiments, those skilled in the art should understand that modifications or equivalent replacements can be made to the application by those skilled in the art, and all technical solutions and improvements thereof without deviating from the spirit and scope of the present application shall fall within the scope of the claims of the present application.

## Claims

1. An electric valve, comprising: a valve body assembly, a valve core, a valve core seat, and a first sealing member, wherein the valve body assembly comprises an accommodating portion defining an accommodating cavity, the first sealing member comprises a body portion, a first protruding portion, and a second protruding portion, the body portion is arranged between the first protruding portion and the second protruding portion along a radial direction of the first sealing member, the valve core seat comprises a first face, a second face, and a third face, the second face extends along an axial direction of the valve core seat, the first face and the third face each extends along an radial direction of the valve core seat, at least part of the valve core seat is arranged in the accommodating cavity, and the first sealing member is arranged in the accommodating cavity and is arranged at an outer periphery of part of the valve core seat;
in a radial direction of the accommodating portion, the first protruding portion abuts against the second face, the second protruding portion abuts against the accommodating portion; in an axial direction of the accommodating portion, one end of the body portion abuts against the first face and another end of the body portion abuts against a side wall of the valve body assembly, the first sealing member is in a tightly pressed state, and an outer surface of part of the valve core fits closely with at least part of the third face.

2. The electric valve according to claim 1, wherein the body portion further comprises protruding ribs, the protruding ribs protrude outwards from two ends of the body portion respectively along an axial direction of the first sealing member and abut against the first face and the side wall of the valve body assembly respectively along the axial direction of the accommodating portion, and the first sealing member is tightly pressed between the first face and the side wall of the valve body assembly through the protruding ribs.

3. The electric valve according to claim 2, wherein the protruding ribs comprise a first protruding rib, a second protruding rib, a third protruding rib, and a fourth protruding rib, the first protruding rib and the second protruding rib are arranged at a same end of the body portion, and the third protruding rib and the fourth protruding rib are arranged at a same other end of the body portion;
in the axial direction of the accommodating portion, the first protruding rib and the second protruding rib each abuts against the first face, and the third protruding rib and the fourth protruding rib each abuts against the side wall of the valve body assembly.

4. The electric valve according to claim 1, wherein the third face comprises an arc-shaped face, the valve core seat further comprises a recess formed by the arc-shaped face recessing to an interior of the valve core seat, and an outer surface of part of the valve core fits closely with the arc-shaped face.

5. The electric valve according to claim 2, wherein the recess comprises an annular inclined face, a plane passing through a central axis of the valve core seat is defined, an included angle θ is defined between a projection of the annular inclined face on the plane and a projection of a straight face of the third face on the plane, and the included angle θ is in a range from 110 degrees to 130 degrees.

6. The electric valve according to claim 1, wherein the body portion comprises an outer peripheral side and an inner peripheral side, the first protruding portion is protruded inwardly from the inner peripheral side along the radial direction of the first sealing member and is equally circumferentially distributed along the inner peripheral side, the second protruding portion is protruded outwardly from the outer peripheral side and is equally circumferentially distributed along the outer peripheral side, and the first protruding portion and the second protruding portion are symmetrically distributed with respect to the body portion.

7. The electric valve according to any one of claims 1 to 6, wherein the valve body assembly comprises a first valve body and a second valve body fixedly connected, the first valve body comprises a first support bracket and the second valve body comprises a second support bracket, the first support bracket abuts against the second support bracket, and the accommodating portion is formed by mating of the first support bracket and the second support bracket.

8. The electric valve according to claim 7, wherein the first support bracket comprises a first recessed face formed by a free end face of the first support bracket recessing inwardly, the second support bracket comprises a second recessed face formed by a free end face of the second support bracket recessing inwardly, the first recessed face is a semi-circular arc-shape face and the second recessed face is a semi-circular arc-shaped face, and the accommodating portion is formed by assembling of the first recessed face and the second recessed face.

9. The electric valve according to claim 8, wherein the first valve body and the second valve body each is formed by injection moulding of a plastic material, the valve core seat is formed by injection moulding of a hard resin material, and the first sealing member is formed by injection moulding of a soft rubber material.

10. The electric valve according to any one of claims 1 to 6, wherein the valve body assembly is provided with a first connection port channel, a second connection port channel, a third connection port channel, and a fourth connection port channel, the valve core is provided with a guide channel extending through the valve core, the first connection port channel is communicated with the guide channel, and the guide channel is communicable with one or two of the second connection port channel, the third connection port channel, and the fourth connection port channel by rotation of the valve core.

11. The electric valve according to claim 10, wherein the guide channel comprises a first opening and a second opening, the guide channel is communicated through the first opening to one or two of the second connection port channel, the third connection port channel, and the fourth connection port channel, and the guide channel is communicated with the first connection port channel through the second opening;
the valve body assembly comprises a first connection port portion forming the first connection port channel, the first connection port portion comprises a projecting portion formed by extending along an axial direction of the first connection port portion, the second opening is arranged at an outer periphery of the projecting portion, and the projecting portion abuts against a wall face forming the guide channel.

12. The electric valve according to claim 11, wherein an outer surface of the valve core comprises a spherical face, the first opening is arranged on the spherical face, the third face comprises an arc-shaped face, and part of the spherical face fits closely with the arc-shaped face;
a plane perpendicular to a central axis of the valve core is defined, an included angle α is defined by projections of the first opening on the plane and a center of the projection of the spherical face on the plane, an included angle β is defined by outer endpoints of the projection of two arc-shaped faces arranged at either side of the first opening on the plane and the center, and an included angle γ is defined by the outer endpoints of the projection of two adjacent arc-shaped faces on the plane and the center, wherein β>α>γ, and 70 degrees ≤α≤ 100 degrees.

13. The electric valve according to claim 10, wherein the valve core comprises a limiting portion, the valve body assembly comprises a stop portion, a valve body cavity is defined in the valve body assembly, the valve core is arranged in the valve body cavity, the limiting portion is configured to abut against the stop portion by rotation of the valve core, and a movement stroke of the valve core is limited by the limiting portion abutting against the stop portion.

14. The electric valve according to claim 10, wherein the electric valve operates in, but is not limited to, five operating modes:
a first operating mode in which the first connection port channel is communicated with the second connection port channel through the guide channel;
a second operating mode in which the first connection port channel is simultaneously communicated with the second connection port channel and the third connection port channel through the guide channel;
a third operating mode in which the first connection port channel is communicated with the third connection port channel through the guide channel;
a fourth operating mode in which the first connection port channel is simultaneously communicated with the third connection port channel and the fourth connection port channel through the guide channel; and
a fifth operating mode in which the first connection port channel is communicated with the fourth connection port channel through the guide channel,
wherein the five operating modes are not limited sequentially.

15. The electric valve according to claim 14, wherein in the second operating mode, an area of a part in which the guide channel is communicated with the second connection port channel and an area of a part in which the guide channel is communicated with the third connection port channel are proportionally adjusted by an angle of rotation of the valve core, and in the fourth operating mode, an area of a part in which the guide channel is communicated with the third connection port channel and an area of a part in which the guide channel is communicated with the fourth connection port channel are proportionally adjusted by an angle of rotation of the valve core.
